# EUROPÄISCHE PATENTSCHRIFT

(11) **EP 1 790 674 B1**
(45) Veröffentlichungstag und Bekanntmachung des Hinweises auf die Patenterteilung: **18.02.2009**
(21) Anmeldenummer: 06023600.7
(22) Anmeldetag: 14.11.2006
(51) Int. Cl.: C08G 18/08, C08G 18/42, C08G 18/66, C08G 18/72, C08G 18/79, C08G 18/80, C09D 175/06

(54) **Wässrige, Urethangruppen enthaltende, hydroxyfunktionelle Polyester-Dispersionen**
Aqueous dispersions of hydroxy-functional polyester containing urethane groups
Dispersions aqueuses de polyesters aux fonctions hydroxyles ayant des groupements urethane

(30) Priorität: 26.11.2005 DE 102005056434
(43) Veröffentlichungstag der Anmeldung: 30.05.2007
(73) Patentinhaber: Bayer MaterialScience AG, 51368 Leverkusen (DE)
(72) Erfinder: Müller, Heino, 51375 Leverkusen (DE); Blum, Harald, Dr., 51375 Leverkusen (DE); Freudenberg, Ulrich, Dr., 50259 Pulheim (DE)

(56) Entgegenhaltungen:
- EP-A1- 0 496 205
- EP-A1- 0 498 156
- DE-A1-9102004 013 25
- US-A1- 5 608 000

## Beschreibung

Die Erfindung betrifft neue wässrige, Urethanguppen enthaltende, hydroxyfunktionelle Polyester-Dispersionen, ein Verfahren zu deren Herstellung sowie deren Verwendung in Kombination mit Vernetzerharzen zur Herstellung von Lacken, Beschichtungen und Klebstoffen.

Bekannt sind wässrige Polyester-Dispersionen für festkörperreiche Einbrennlacke, z.B. wie in EP-A 498 156 offenbart, die als wesentlichen Bestandteil Urethan-, Carboxyl- und Hydroxylgruppen aufweisende Polyesterharze enthalten. Die Polyesterharze sind Umsetzungsprodukte aus 77 bis 89 Gew.-% eines verzweigten Polyesterpolyols, 2,5 bis 4,5 Gew.-% einer Bis(hydroxymethyl)alkan-carbonsäure und 9 bis 19 Gew.-% einer zu mindestens 50 % aus Hexamethylendiisocyanat bestehenden Diisocyanatkomponente. Diese Produkte sind zur Herstellung festkörperreicher Lacke geeignet, genügen aber in manchen Anwendungen nicht mehr den Anforderungen bezüglich der Applikationssicherheit und der resultierenden Beschichtungseigenschaften, insbesondere bezüglich des Lackverlaufes und des Auftretens von Oberflächenstörungen. Um die Applikationssicherheit praxisgerechter zu gestalten, müssen bei diesen Systemen häufig relative große Mengen flüchtiger organischer Lösemittel eingesetzt werden, was aus ökonomischen und ökologischen Gründen nicht wünschenswert ist und trotzdem nicht immer zu zufriedenstellenden Ergebnissen führt.

Wässrige Bindemittelkombinationen, enthaltend eine Urethan-, Hydroxy- und Carboxylatgruppen aufweisende Polyester-Dispersion und eine darin dispergierte Polyisocyanatkomponente mit freien Isocyanatgruppen sind z.B. in der EP-A 496 205 beschrieben. Die Polyester-Dispersionen gemäß EP-A 496 205 enthalten u.a. relativ hohe Anteile an Carboxyl- bzw. Carboxylatgruppen (Säurezahl 10 bis 45 mg KOH/g Substanz), um die Polyisocyanatkomponente stabil dispergieren zu können und um homogene, klare Beschichtungen zu ermöglichen. Die Applikationssicherheit und die Filmoptischeneigenschaften der Bindemittelkombinationen gemäß EP-A 496 205 genügen jedoch den heutigen hohen Ansprüchen bezüglich Verlauf, erzielbare Schichtstärke und den Beständigkeitseigenschaften der Beschichtung gegen Belastung mit Wasser oder Lösemittel häufig nicht mehr.

In der EP-A 469 389 werden wässrige 2-Komponenten Polyurethan-Beschichtungszusammensetzungen auf Basis wässriger Polyurethan-Dispersionen mit einem Urethan- bzw. Harnstoffgruppengehalt (-NH-COO-) von 9 bis 20 % und wasserdispergierbaren, hydrophile anionische und Ethylenoxid-Gruppen enthaltenden Polyisocyanatvernetzern offenbart. Diese Produkte enthalten relativ große Mengen organischer Lösemittel und sind zur Herstellung von bei Raumtemperatur aushärtbaren, reaktiven 2-Komponenten Beschichtungen mit eng begrenzter Topfzeit geeignet, nicht jedoch für lagerstabile, einkomponentig verarbeitbare Einbrennlacke. Aufgrund der hohen Anteile an hydrophilen Gruppen sind die Beständigkeitseigenschaften und auch die filmoptischen Eigenschaften nicht immer den Anforderungen entsprechend.

DE-A 3 345 448 beschreibt wässrige Polyurethan-Einbrennlacke, enthaltend u.a. Carboxylatgruppen und blockierte Isocyanatgruppen aufweisende Polyurethan-Prepolymere, sowie Carboxylatgruppen enthaltende Polyhydroxyverbindungen auf Basis von Polyether- und/oder Polyesterurethan-Prepolymeren. Diese Produkte enthalten größere Mengen an organischen Lösemitteln und zeichnen sich vor allem durch ihre gute Pigmentierbarkeit aus. Allerdings besteht in Bezug auf die Applikationssicherheit, den Verlauf der Beschichtungen und auf die erzielbare fehlerfreie Schichtstärke Verbesserungsbedarf. Die mitverwendeten Polyether können sich in diesem System negativ auf die Bewitterungseigenschaften der Beschichtungen auswirken, ebenso wir durch das Vorhandensein von Carboxylatgruppen in beiden Komponenten der Einbrennlacke die Hydrophilie der Beschichtungen erhöht.

In der DE-A 3 936 288 werden in Wasser dispergierbare Bindemittelkombinationen für Einbrennfüller beschrieben, die u.a. Carboxylatgruppen enthaltende, urethanmodifizierte Polyesterharze enthalten, die eine Säurezahl von 15 bis 36 mg KOH/g Substanz aufweisen und Umsetzungsprodukte sind aus 72 bis 80 Gew.% Polyesterpolyol, 4 bis 7 Gew. % 2,2-Bis(hydroxymethyl)alkancarbonsäure und 15 bis 25 Gew.% einer Diisocyanatkomponente. Die Produkte enthalten größere Mengen an organischen Lösemitteln und die entsprechenden Beschichtungen genügen nicht immer den Anforderungen in Bezug auf die Applikationssicherheit und die Beständigkeitseigenschaften.

In der EP-A 669 352 wurden wässrige Dispersionen von Polyester-Polyurethanen offenbart, die geeignet sind zur Verwendung in hochelastischen Lacken, Beschichtungen und Dichtmassen, insbesondere in Softfeellacken. Die Polyester-Polyurethane sind im Wesentlichen Umsetzungsprodukte von linearen Polyesterpolyolen und anderen linearen Polyolen, wie z.B. Polycarbonatdiole oder Polyetherdiole, Hydroxy- und/oder Aminocarbonsäuren, gegebenenfalls niedermolekulare Hydroxyl- oder Aminogruppen enthaltende Verbindungen, gegebenenfalls hydrophile, Ethylenoxideinheiten enthaltenden Alkoholen und einer Polyisocyanatkomponente. Die Produkte sind für Lacke und Beschichtungen, wie z.B. Einbrennfüller oder Einschichtdecklacke aufgrund Ihrer hohen Elastizität, des ausgeprägten Softfeeleffektes und der niedrigen Funktionalität (im Wesentlichen difunktionell) weniger gut geeignet. Die in der EP-A 669 352 beschriebenen Produkte werden im Wesentlichen in wässrigen 3-Komponenten Lacken, bestehend aus hydroxyfunktioneller Dispersion, nicht funktioneller Dispersion und Vernetzer, eingesetzt. Dieses System ist in der Herstellung und Anwendung für viele Anwendungsbereiche viel zu aufwendig. Daher besteht nach wie vor Bedarf nach kostengünstigen und einfach herstellbaren Alternativen, die außerdem verbesserte Applikationseigenschaften aufweisen sollten.

In der DE-A 3 901 190 wird ein Verfahren zur Herstellung wässriger, oxidativ trocknender (d.h. durch Reaktion mit Luftsauerstoff vernetzbare) Alkydharze beschrieben, die 70 bis 88 Gew.% eines Alkydharzes, 4 bis 7 Gew.% 2,2-Bis(hydroxymethyl)-alkancarbonsäure und 10 bis 23 Gew.% einer Diisocyanatkomponente enthalten und noch organische Lösemittel aufweisen. Diese Produkte sind zur Herstellung von Bindemittelkombinationen mit den oben beschrieben Eigenschaften nicht geeignet, u.a. deshalb, weil sie aufgrund der hohen Anteile an ungesättigten Fettsäuren bei der Aushärtung bei erhöhten Temperaturen eine sehr starke Vergilbung zeigen.

Obwohl der Stand der Technik verschiedene Polyester-Polyurethan-Dispersionen umfasst, werden nach wie vor verbesserte hydroxyfunktionelle, Urethangruppen enthaltende Polyester-Dispersionen benötigt. Diese sollten möglichst auf Basis kostengünstiger Rohstoffe, d.h. unter Einsatz minimaler Mengen an, in der Regel teuren, Hydrophilierungsmitteln und Isocyanatkomponenten einfach herstellbar sein. Darüber hinaus sollten sie in ihrer wässrigen Lieferform wenig organisches Lösemittel enthalten, über längere Zeit stabil sein, d.h. keinen übermäßigen hydrolytischen Abbau bei Lagerung aufweisen und in Kombination mit unterschiedlichsten Vernetzerharzen lagerstabile Lackformulierungen ergeben. Diese Lackformulierungen sollten eine hohe Applikationssicherheit, insbesondere bezügliche Verlauf und Krateranfälligkeit gewährleisten. Des Weiteren sollten sie störungsfrei erzielbare Schichtstärken aufweisen, keinen ausgeprägten Softfeelcharakter haben und insgesamt nach Aushärtung ein ausgewogenes Eigenschaftsniveau bezüglich Härte/Elastizität, Haftung, Lösemittelbeständigkeit und Filmoptik aufweisen.

Überraschenderweise wurde gefunden, dass spezielle hydroxyfunktionelle, Urethangruppen enthaltende Polyester-Dispersionen die oben genannten Anforderungen erfüllen und in Kombination mit Vernetzerharzen, wie z.B. Melaminharzen und/oder Polyisocyanaten zu Lacken und Beschichtungen mit dem geforderten Eigenschaftsniveau aushärtbar sind. Besonders überraschend ist, dass auch mit den für diese Rohstoffklasse extrem geringen Gehalten an hydrophilen Gruppen ausgesprochen stabile und relativ feinteilige Dispersionen erhalten werden können. Trotz Einsatz großer Mengen stark verzeigter und damit hochfunktionalisierter Polyester ist es bei erfindungsgemäßer Reaktionsführung möglich, auf kostengünstige Art und Weise stabile, den beschriebenen Anforderungen genügende, Dispersionen herzustellen.

Gegenstand der Erfindung sind hydroxyfunktionelle, Urethangruppen enthaltende Polyester-Dispersionen enthaltend folgende Aufbaukomponenten:
a) 87,0 bis 95 Gew.-% mindestens eines hydroxyfunktionellen Polyesters mit einer mittleren Funktionalität >2,
b) 1 bis 2,4 Gew.-% mindestens einer Di- und/oder Tri- und/oder Monohydroxycarbonsäure und/oder Hydroxysulphonsäure und/oder Aminosulphonsäure und/oder Aminocarbonsäure,
c) 4 bis 10,6 Gew.-% mindestens einer, mindestens difunktionellen Polyisocyanatkomponente und
d) 0 bis 3 Gew.-% sonstiger Komponenten,
wobei sich die Prozentangaben a) bis d) zu 100% ergänzen, und die zur Stabilisierung der Dispersion über die Komponente b) eingebauten Säuregruppen zu 50 bis 150 % als Salzgruppen vorliegen.

Die Prozentangaben für a), b), c), d) beziehen sich immer auf 100 %.

Bevorzugt enthalten die erfindungsgemäßen Polyester-Dispersionen 88,5 bis 93 Gew.-% der Komponente a), 1,5 bis 2,2 Gew.-% der Komponente b), 5,0 bis 9,3 Gew.-% der Komponente c) und 0 bis 1 Gew.-% an sonstigen Komponenten d).

Besonders bevorzugt enthalten die erfindungsgemäßen Polyester-Dispersionen 89,2 bis 93 Gew.-% der Komponente a), 1,5 bis 2,2 Gew.-% der Komponente b), 5,0 bis 8,6 Gew.-% der Komponente c).

Die über die Komponente b) eingebaute Säurezahlen der erfindungsgemäßen hydroxyfunktionellen, Urethangruppen enthaltenden Polyester-Dispersionen liegen bei 5,0 bis 14,5 mg KOH/g Substanz, bevorzugt bei 5,0 bis 9,9 mg KOH/g und ganz besonders bevorzugt bei 6,0 bis 8,9 mg KOH/g Substanz. Diese niedrigen Säurezahlen wirken sich überraschenderweise positiv auf die filmoptischen Eigenschaften entsprechender Beschichtungen, wie z.B. Verlauf, Krateranfälligkeit und erzielbare Schichtstärke aus. Überraschenderweise können auch mit solch niedrigen Säurezahlen, stabile hochwertige Dispersionen erhalten werden, ohne dass externe Emulgatoren, Stabilisatoren bzw. oberflächenaktive Substanzen eingesetzt werden müssen.

Bei bevorzugten erfindungsgemäßen Dispersionen liegen die über die Komponente b) eingebauten Säuregruppen zu 75 bis 120 %, besonders bevorzugt zu 95 bis 110 % als Salzgruppen vor. Bevorzugt liegen die über die Komponente b) eingebauten Säuregruppen als Carboxylatgruppen vor.

Der Urethangruppengehalt der erfindungsgemäßen Polyester-Dispersionen (ermittelt nach dem Anteil der Strukturformel -NH-CO-O- am Gesamtaufbau des, der erfindungsgemäßen Polyester-Dispersionen zugrunde liegenden, 100%igen Polymers) liegt im Bereich von 3,0 Gew.-% bis 6,4 Gew.-%, bevorzugt von 4,0 Gew.-% bis 6,2 Gew.-%.

Überraschenderweise werden trotz dieses niedrigen Urethangruppengehaltes stabile und hochwertige Dispersionen erhalten, die das geforderte Eigenschaftsniveau aufweisen.

Die mittleren Molekulargewichte M_{w} der erfindungsgemäßen Dispersionen, bestimmbar z.B. per Gelpermeationscromatographie mit Polystyrol als Standard, liegen üblicherweise bei 8.000 bis 26.000 g/mol, bevorzugt bei 10.000 bis 18.000 g/mol und damit wesentlich niedriger als z.B. bei Polyurethan-Dispersionen nach dem Stand der Technik.

Geeignete Polyester a) können nach an sich bekannten Verfahren unter Abspaltung von Wasser bei Temperaturen von 100 bis 260°C, gegebenenfalls unter Mitverwendung üblicher Veresterungskatalysatoren, vorzugsweise nach dem Prinzip einer Schmelz- oder Azeotropkondensation, hergestellt werden. Bevorzugtes Herstellverfahren für die Polyester a) ist eine Schmelzkondensation im Vakuum oder unter Einsatz eines Inertgases.

Die Polyester a) weisen eine durchschnittliche Funktionalität von > 2,0 bevorzugt von > 2,5 und besonders bevorzugt von > 3,0 auf.

Die theoretische Funktionalität der Polyester a) wird bestimmt nach der Formel:

Val OH - Val COOH / (Mol COOH + Mol OH) - Val COOH.

Es können dabei auch Mischungen verschiedener Polyester und auch Mischungen von Polyestern mit unterschiedlichen Funktionalitäten eingesetzt werden, wobei die durchschnittlichen Funktionalitäten auch der Polyestermischungen >2, bevorzugt > 2,5 und besonders bevorzugt > 3,0 sind. Die Mitverwendung von Polyester mit einer Funktionalität von = 2 oder kleiner in diesen Polyestermischungen ist in untergeordneten Mengen möglich.

Die Polyester a) haben rechnerisch ermittelte theoretische Molekulargewichte von 500 bis 5000 g/Mol, bevorzugt von 750 bis 4000 g/Mol, besonders bevorzugt von 750 bis 2500g/Mol.

Das theoretische Molekulargewicht der Polyester wird bestimmt nach der Formel: Masse des Ansatzes [g] / (Mol COOH + Mol OH)- Val COOH.

Bevorzugt eingesetzte Polyester a) sind Umsetzungsprodukte von
a1) 30 bis 77 Gew.-% mindestens einer, mindestens difunktionellen Carbonsäure bzw. deren Anhydrids,
a2) 20 bis 50 Gew.-% mindestens eines Diols,
a3) 3 bis 30 Gew.-% mindestens eines Alkohols mit mehr als 2 Hydroxylgruppen,
a4) 0 bis 20 Gew.-% sonstige hydroxy- und/oder carboxyfunktioneller Komponenten und/oder Caprolacton.

Besonders bevorzugte Polyester a) sind Umsetzungsprodukte von
a1) 40 bis 68 Gew.-% mindestens einer, mindestens difunktionellen Carbonsäure bzw. deren Anhydrids,
a2) 25 bis 50 Gew.-% mindestens eines Diols,
a3) 7 bis 26 Gew.-% mindestens eines Alkohols mit mehr als 2 Hydroxylgruppen,
a4) 0 bis 5 Gew.-% sonstige hydroxy- und/oder carboxyfunktioneller Komponenten und/oder Caprolacton.

Geeignete Polyesterrohstoffe a1) sind z.B. Phthalsäureanhydrid, Isophthalsäure, Terephthalsäure, Adipinsäure, Sebacinsäure, Korksäure, Bernsteinsäure, Maleinsäureanhydrid, Fumarsäure, Dimerfettsäuren, Tetrahydrophthalsäureanhydrid, Hexahydrophthalsäureanhydrid, Cyclohexandicarbonsäure und/oder Trimellithsäureanhydrid und Mischungen dieser und/oder anderer Rohstoffe a1).

Bevorzugte Komponenten a1) sind Adipinsäure, Phthalsäureanhydrid, Tetrahydrophthalsäureanhydrid, Isophthalsäure und Glutarsäure.

Besonders bevorzugt ist die Komponente a1) eine Mischung aus mindestens einer aliphatischen, im Wesentlichen linear aufgebauten Dicarbonsäure und mindestens einer, mindestens difunktionellen Carbonsäure bzw. deren Anhydrid. Ganz besonders bevorzugt ist eine Mischung aus Phthalsäureanhydrid und/oder Isophthalsäure mit Adipinsäure und/oder Glutarsäure im Verhältnis 0,8 bis 3 Teile aromatische Dicarbonsäure bzw. deren Anhydrid bezogen auf 1 Teil aliphatischer Carbonsäure.

Geeignete Polyesterrohstoffe a2) sind z.B. 1,2-Ethylengykol, Diethylenglykol, Triethylenglykol, Tetraethylenglykol, 1,2-Propylenglykol, Dipropylenglykol, Tripropylenglykol, 1,3-Propandiol, 1,3-Butandiol, 1,4-Butandiol, 1,6-Hexandiol, Neopentylgylkol, 1,4-Cyclohexandimethanol, 1,4-Cyclohexandiol, Butendiol, Butindiol, hydrierte Bisphenole, Trimethylpentandiol, 1,8-Octandiol und/oder Tricyclodecandimethanol und Mischungen dieser und/oder anderer Rohstoffe a2).

Bevorzugte Komponenten a2) sind 1,4-Butandiol, Neopentylglykol, 1,2-Propylenglykol, Ethylenglykol, Diethylenglykol und 1,6-Hexandiol. Besonders bevorzugt ist a2) ein Diol, welches zu mindestens 60 % aus Neopentylgylkol besteht.

Geeignete Polyesterrohstoffe a3) sind z.B. Trimethylolpropan, ethoxyliertes Trimethylolpropan, propoxyliertes Trimethylolpropan, propoxyliertes Glycerin, ethoxyliertes Glycerin, Glycerin, Pentaerythrit, Rizinusöl und/oder Mischungen dieser und/oder anderer Rohstoffe a3).

Bevorzugte Komponenten a3) sind Trimethylolpropan, Glycerin, Rizinusöl und Pentaerytrit. Besonders bevorzugt enthält die Komponente a3) mindestens 20 Gew.-%, bezogen auf die Gesamtmenge an a3), an Rizinusöl. Ganz besonders bevorzugt ist eine Mischung aus Trimethylolpropan oder Glyzerin mit Rizinusöl im Verhältnis 0,25 bis 1,25 Teile Rizinusöl, bezogen auf 1 Teil Trimethylolpropan oder Glycerin.

Geeignete optional einzusetzende Polyesterrohstoffe a4) sind z.B. C₈-C₂₂-Fettsäuren wie z.B. 2-Ethylhexansäure, Stearinsäure, hydrierte Fettsäuren, Benzoesäure, monofunktionelle Alkohole wie Butylglykol, Butyldiglykol, Cyclohexanol, andere monofunktionelle Alkohole wie z.B. Polyethylenoxide, Polypropylenoxide, Polyethylen/propylenoxidmisch- bzw. Blockcopolymere und/oder auch Mischungen der genannten und gegebenenfalls auch anderer Komponenten a4).

Bevorzugte Komponenten a4) sind monofunktionelle Alkohole wie z.B. Polyethylenoxide, Polypropylenoxide, Polyethylen/propylenoxidmischpolymere bzw. -blockcopolymere. Besonders bevorzugt wird auf den Einsatz von Komponenten a4) verzichtet.

Die Komponente a) der erfmdungsgemäßen Polyester-Dispersionen besteht zu 60 bis 100 Gew.-% aus mindestens einem Polyester und zu 40 bis 0 Gew.-% aus anderen hydroxyfunktionellen Komponenten des Molekulargewichtsbereichs von 500 bis 5000 g/mol die C₂- und/oder C₃- und/oder C₄-Polyether- und/oder Carbonat- und/oder Polyetherester- und/oder Polymerisat- und/oder Polyesterstruktureinheiten enthalten können. Die mittlere Funktionalität solcher gegebenenfalls eingesetzten Mischungen liegt bevorzugt bei > 2,5, besonders bevorzugt bei > 3,0. Bevorzugt hat die in solchen Mischungen zu 60 bis 100 % enthaltene Polyester-Hauptkomponente eine Funktionalität > 3.

Ganz besonders bevorzugte Polyester a) sind Umsetzungsprodukte von
a1) 40 bis 68 Gew.-% einer Mischung aus Phthalsäureanhydrid und/oder Isophthalsäure mit Adipinsäure und/oder Glutarsäure im Verhältnis 0,8 bis 3 Teile aromatische Dicarbonsäure bzw. deren Anhydrid bezogen auf 1 Teil aliphatischer Carbonsäure,
a2) 25 bis 50 Gew. % eines Diols welches zu mindestens 60 % aus Neopentylgylkol besteht,
a3) 7 bis 26 % Alkohole mit mehr als 2 Hydroxylgruppen, bestehend aus einer Mischung aus Trimethylolpropan oder Glyzerin mit Rizinusöl im Verhältnis 0,25 bis 1,25 Teile Rizinusöl, bezogen auf 1 Teil Trimethylolpropan oder Glycerin,
die ein rechnerisch ermittelbares Molekulargewicht Mw von 750 bis 2500 g/Mol und eine Funktionalität > 3 aufweisen.

Die Komponente b) enthält mindestens eine ionische oder potentiell ionische Verbindung mit mindestens einer Säuregruppe und mindestens einer gegenüber Isocyanatgruppen reaktionsfähigen Gruppe. Geeignete Säuregruppen sind z.B. Carboxyl- und Sulphonsäuregruppen. Geeignete gegenüber Isocyanatgruppen reaktionsfähige Gruppen sind z.B. Hydroxyl- und/oder Aminogruppen.

Geeignete Komponenten b) sind z.B. Di- und/oder Tri- und/oder Monohydroxycarbonsäuren und/oder Hydroxysulphonsäuren und/oder Aminosulphonsäuren und/oder Aminocarbonsäuren.

Bevorzugt handelt es sich bei Komponente b) um mindestens eine, bevorzugt eine oder zwei Hydroxyl- und/oder Aminogruppen aufweisende Carbonsäure. Besonders bevorzugt wird als Komponente b) Dimethylolpropionsäure, Dimethylolbuttersäure und/oder Hydroxypivalinsäure verwendet.

Ebenfalls geeignete Säuren sind beispielsweise andere 2,2-Bis(hydroxymethyl)-alkanearbonsäure, wie z.B. Dimethylolessigsäure oder 2,2-Dimethylolpentansäure, Dihydroxybernsteinsäure, Michael-Additionsprodukte von Acrylsäure an Amine wie z.B. Isophorondiamin oder Hexamethylendiamin, oder Gemische derartiger Säuren und/oder Dimethylolpropionsäure und/oder Hydroxypivalinsäure. Ebenfalls möglich ist die Verwendung von gegebenenfalls Ethergruppen aufweisenden Sulfonsäurediolen der in US-A 4 108 814 beschriebenen Art oder auch von 2-Aminoethyl-aminoethansulphonsäure.

Die freien Säuregruppen stellen "potentiell ionische" Gruppen dar, während es sich bei den durch Neutralisation mit Neutralisationsmitteln erhaltenen salzartigen Gruppen, Carboxylat- bzw. Sulphonatgruppen, um "ionischen" Gruppen handelt.

Geeignete Neutralisationsmittel, die bereits bei Umsetzung der Komponenten a) bis) d) zugegen sein können sind z.B. Triethylamin, N-Methylmorpholin, Dimethylisopropylamin, Ethyldiisopropylamin, Dimethylcylohexylamin, Kaliumhydroxid und/oder Natriumhydroxid.

Nach vollständiger Umsetzung der Komponenten a) bis d) können auch andere Neutralisationsmittel entweder vor, während oder auch nach dem Dispergieren zugegeben werden. An dieser Stelle geeignete Neutralisationsmittel neben den oben genannten sind z.B. Dimethylethanolamin, Ammoniak, Morpholin, N-Methyl-diethanolamin, Aminomethylpropanol, Triethanolamin, Ethanolamin, Diethanolamin und/oder 2-Amino-2-methyl-1-propanol und/oder andere. Es können auch Mischungen bzw. Kombinationen unterschiedlicher Neutralisationsmittel eingesetzt werden.

Insgesamt wird soviel Neutralisationsmittel zugegeben, dass der Neutralisationsgrad, bezogen auf eingebaute Säuregruppen, 50 bis 150 %, bevorzugt 75 bis 120 % und besonders bevorzugt 95 bis 110 % beträgt. Bei einem Neutralisationsgrad von über 100% liegt dann neben 100% ionischen Salzgruppen noch zusätzlich freies Neutralisationsamin vor.

Geeignete Komponenten c) enthalten mindestens ein mindestens difunktionelles Polyisocyanat. Dies können z.B. sein di-, tri- und gegebenenfalls höherfunktionelle aliphatische Isocyanate, wie z.B. Hexamethylendiisocyanat, Butandiisocyanat, Isophorondiisocyanat, 1-Methyl-2,4 (2,6)-diisocyanatocyclohexan, Norbornandiisocyanat, Tetramethylxylylendiisocyanat, Hexahydroxylylendiisocyanat, Nonantriisocyanat, 4,4'- Diisocyanatodicyclohexylmethan. Ebenfalls geeignet, jedoch weniger bevorzugt sind aromatische Isocyanate, wie z.B. 2,4 (2,6)-Diisocyanatotoluol oder 4,4'-Diisocyanato-diphenylmethan sowie höhermolekulare bzw. oligomere Polyisocyanate des Molekulargewichtsbereiches 336 bis 1500, auf Basis der genannten Isocyanate. Es können auch Mischungen dieser Isocyanate eingesetzt werden.

Bevorzugt werden 4,4'-Diisocyanatodicylohexylmethan und/oder Isophorondiisocyanat und/oder Hexamethylendiisocyanat und/oder 1-Methyl-2,4 (2,6)-diisocyanatocyclohexan, gegebenenfalls auch in Mischung mit 2,4 (2,6) Diisocyanatotoluol eingesetzt.

Besonders bevorzugt ist der Einsatz einer difunktionellen aliphatischen Isocyanatkomponente, die mindestens 40 Mol-%, besonders bevorzugt 75 Mol-%, ganz besonders bevorzugt 100 Mol-% an Hexamethylendiisocyanat enthält.

Geeignete Komponenten d) sind z.B. monohydroxyfunktionelle Ethylenoxidpolyether, monohydroxyfunktionelle Propylenoxid/Ethylenoxidcopolyether bzw. monohydroxyfunktionelle Propylenoxid/Ethylenoxidblockpolyether des Molekulargewichtsbereichs 200 bis 3000 g/mol, wie z.B. Hydrazin, Adipinsäuredihydrazid, Ethylendiamin, Isophorondiamin, Ethylenglykol, Butandiol, Hexandiol, Butylglykol, Butyldiglykol, Methoxypropanol und andere NCO-reaktive Verbindungen, bzw. deren Gemische.

Zur Herstellung der urethangruppenhaltigen, hydroxyfunktionellen Polyesterdispersionen können prinzipiell zwei verschiedene Verfahren eingesetzt werden.

Gegenstand der Erfindung ist auch ein einstufiges Verfahren zur Herstellung der erfindungsgemäßen Polyester-Dispersionen, dadurch gekennzeichnet, dass in einem einzigen Reaktionsschritt die Komponenten a) bis d) bei einer Temperatur von 40 bis 140°C und in Anwesenheit von 5 bis 50 Gew.-% organischer Lösungsmittel sowie von nicht NCO-reaktiven Neutralisationsmitteln umgesetzt werden, bis der NCO-Wert = 0 % erreicht hat, anschließend gegebenenfalls Neutralisationsmittel und gegebenenfalls weitere organische Lösemittel und/oder Hilfsmittel zugesetzt werden und Wasser zur Polymerlösung oder die Polymerlösung zu Wasser gegeben wird.

Nachträglich können gegebenenfalls Neutralisationsmittel und/oder Hilfsmittel zugesetzt und schließlich überschüssige Lösemittelmengen ganz oder teilweise destillativ abgetrennt werden.

Gegenstand der Erfindung ist auch ein zweistufiges Verfahren zur Herstellung der hydroxyfunktionellen, Urethangruppen enthaltenden Polyester-Dispersionen, dadurch gekennzeichnet, dass in einem ersten Schritt ein NCO-funktionelles Zwischenprodukt bei 40 bis 140°C, in Anwesenheit von 5 bis 50 Gew.-% organischen Lösemitteln und von nicht NCO-reaktiven Neutralisationsmitteln, durch Umsetzung der Komponenten b), c) und d) mit einer solchen Menge der Komponente a) hergestellt wird, dass ein NCO:OH(NH)-Verhältnis von größer 1,4:1 resultiert und in einem zweiten Schritt die restliche Menge der Komponente a) und gegebenenfalls weitere Lösemittel und/oder Neutralisationsmittel zugegeben und solange umgesetzt werden bis der NCO-Gehalt = 0 % erreicht hat und anschließend gegebenenfalls Neutralisationsmittel und gegebenenfalls weitere organische Lösemittel und/oder Hilfsmittel zugesetzt werden und Wasser zur Polymerlösung oder die Polymerlösung zu Wasser gegeben wird.

Nachträglich können nochmals Neutralisationsmittel und/oder Hilfsmittel zugesetzt und überschüssige Lösemittelmengen ganz oder teilweise destillativ abgetrennt werden.

Gegebenenfalls kann der Reaktion sowohl bei der einstufigen als auch bei der zweistufigen Variante ein geeigneter Katalysator zugesetzt werden, wie z.B. wie z.B. Dibutylzinndilaurat, Zinn-2-oktoat, Dibutylzinnoxid und Diazabicyclononan.

Gegebenenfalls kann der Reaktion sowohl bei der einstufigen als auch bei der zweistufigen Variante ein geeigneter Stabilisator zugesetzt werden, wie z.B. Dibutylphosphat, Phosphorsäure oder Chlorpropionsäure.

Bevorzugt ist das zweistufigen Herstellverfahren. Bei diesem Herstellverfahren werden in der ersten Reaktionsstufe zur Herstellung des NCO-funktionellen Zwischenproduktes 4 bis 30 Gew.-%, bevorzugt 4 bis 20 Gew.-% und ganz besonders bevorzugt 4 bis 10 Gew.-% an Komponente a), bezogen auf die Gesamtmengen der in der ersten und zweiten Reaktionsstufe insgesamt eingesetzten Mengen a) bis d), eingesetzt. Wird die Komponente a) in Mengen von 4 bis 10 Gew.-% in der ersten Reaktionsstufe eingesetzt, weist diese Komponente a) eine Funktionalität von bevorzugt > 3 auf.

Besonders bevorzugt werden im ersten Reaktionsschritt
aI) 4 bis 30 Gew.-% mindestens eines hydroxyfunktionellen Polyesters mit einer mittleren Funktionalität ≥2,
b) 1 bis 2,4 Gew.-% mindestens einer Di- und/oder Tri- und/oder Monohydroxycarbonsäure und/oder Hydroxysulphonsäure und/oder Aminosulphonsäure und/oder Aminocarbonsäure,
c) 4 bis 10,6 Gew.-% mindestens einer, mindestens difunktionellen Polyisocyanatkomponente und
d) 0 bis 3 Gew.-% sonstiger Komponenten
zu einem NCO-funktionellem Zwischenprodukt umgesetzt, welches dann in einem zweiten Reaktionsschritt mit
aII) 57,1 bis 91 Gew.-% eines hydroxyfunktionellen Polyesters mit einer mittleren Funktionalität >3
zu einem hydroxyfunktionellen, Urethangruppen enthaltendem Polyester umgesetzt wird, wobei die Summe der Gewichtsprozente aI), b), c), d) und aII) immer 100% beträgt.

In den Umsetzungsprodukten können die Polyester aI) bzw. aII) grundsätzlich verschieden oder gleichartig sein.

Die erfindungsgemäßen hydroxyfunktionellen, Urethangruppen enthaltenden Polyester-Dispersionen enthalten in der Regel 0 bis 10 Gew.-%, bevorzugt 0 bis 3 Gew.-% organische Lösemittel. Die gegebenenfalls durchgeführte destillative Entfernung überschüssiger Lösemittelmengen kann z.B. unter reduziertem Druck bei z.B. 20 bis 80°C während oder nach dem Dispergieren in/mit destilliertem Wasser erfolgen.

Der Festkörpergehalt der erfindungsgemäßen Polyester-Dispersionen liegt bei 30 bis 55 Gew.-%, bevorzugt bei 35 bis 45 Gew.-%.

Die erfindungsgemäßen Dispersionen weisen Teilchendurchmesser, bestimmt z.B. durch LKS-Messungen, von 25 bis 500 nm, bevorzugt von 50 bis 180 nm auf.

Allgemein können die erfindungsgemäßen hydroxyfunktionellen, Urethangruppen enthaltenden Polyester-Dispersionen in Lacken, Beschichtungen, Klebstoffen, Dichtstoffen verwendet werden.

Gegenstand der Erfindung sind ebenfalls wässrige Bindemittelkombinationen, enthaltend
A) erfindungsgemäße, hydroxyfunktionelle, Urethangruppen enthaltende Polyester-Dispersionen und
B) mindestens ein Vernetzerharz.

Geeignete Vernetzerharze B) sind blockierte Polyisocyanate B1), welche gegebenenfalls hydrophil modifiziert sein können und/oder hydrophile, unblockierte Polyisocyanate B2) und/oder Aminovernetzerharze, wie z.B. teilweise oder ganz veretherte Melaminharze bzw. Harnstoff-Formaldehyd-Kondensationsprodukte bzw. vernetzende Aminoplastharze.

Die Herstellung der wässrigen Bindemittelkombinationen, enthaltend die erfindungsgemäßen Dispersionen, erfolgt entweder durch Mischen der fertigen erfindungsgemäßen Polyester-Dispersion A) mit einem oder mehreren der beschrieben Vernetzerharzen B) oder es wird bereits bei der Herstellung der Polyester-Dispersion vor dem Dispergierschritt eines oder mehrere der Vernetzerharze zugegeben und dann gemeinsam dispergiert. Diese zweite Variante ermöglicht den Einsatz an sich nicht hydrophiler Vernetzerharze, ist aber auf den Einsatz von Vernetzerharzen beschränkt, die bei den Herstellbedingungen nicht mit Wasser reagieren.

Die erfindungsgemäßen hydroxyfunktionellen, Urethangruppen enthaltenden Polyester-Dispersionen werden bevorzugt in Kombination mit, gegebenenfalls hydrophilierten, blockierten Polyisocyanaten und/oder Aminovernetzerharzen als 1-Komponenten-Beschichtungsmitteln verwendet. Dies sind z.B. Einbrennlacke und -beschichtungen, die bei Temperaturen von 120 bis 230°C ausgehärtet werden. Besonders bevorzugte Verwendungen sind dabei Einbrennfüllerlackierungen, Einschichtlacke, Steinschlagschutzgrundierungen und pigmentierte Decklacke.

Gegenstand der Erfmdung sind wässrige 1-Komponenten-Beschichtungsmittel enthaltend
A) 60 bis 98 Gew.-%, bevorzugt 70 bis 98 Gew.-% erfindungsgemäße Polyester-Dispersionen, gegebenenfalls zusammen mit anderen Dispersionen und
B1) 2 bis 40 Gew.-%, bevorzugt 2 bis 30 Gew.-% mindestens eines blockierten polyisocyanats, welches gegebenenfalls hydrophil modifiziert sein kann und/oder mindestens eines Aminovernetzerharzes.

Geeignete blockierte Polyisocyanate sind z.B. Umsetzungsprodukte von difunktionellen Isocyanaten wie z.B. Isophorondiisocyanat, Hexamethylendiisocyanat, 2,4- bzw. 2,6-Diisocyanatotoluol, 4.4'-Diphenylmethandiisocyanat und/oder deren höhermolekularen Trimere, Biurete, Urethane, Iminooxadiazindion und/oder Allophanate mit Blockierungsmittel wie z.B. Methanol, Ethanol, Butanol, Hexanol, Benzylakohol, Acetoxim, Butanonoxim, Caprolactam, Phenol, Diethylmalonat, Dieethylmalonat, Dimethylpyrazol, Triazol, Dimethyltriazol, Acetessigester, Diisopropylamin, Dibutylamin, tert.-Butylbenzylamin, Cyclopentanoncarboxyethylester, Dicyclohexylamin und/oder tert.-Butylisopropylamin.

Die genannten blockierten Polyisocyanate können auch durch Einbau hydrophiler Gruppen, wie z.B. Carboxylat-, Sulphonat- und/oder Polyethylenoxidstrukturen in eine wasserdispergierbare Form überführt werden und so in Kombination mit den erfindungsgemäßen Dispersionen eingesetzt werden. Die genannten blockierten Polyisocyanate können auch unter Mitverwendung hydroxy- bzw. aminofunktioneller, auch höhermolekularere Komponenten, wie z.B. Diole, Triole, Aminoalkohole, Polyester, Polyether, Polycarbonate und Mischungen der genannten und/oder anderer Rohstoffe hergestellt werden.

Die erfindungsgemäßen hydroxyfunktionellen, Urethangruppen aufweisenden Polyester-Dispersionen können auch in Kombination mit, gegebenenfalls hydrophilierten, Polyisocyanaten mit freien Isocyanatgruppen in wässrigen 2-Komponenten-Beschichtungsmitteln verwendet werden. In dieser Verwendung hat das Beschichtungsmittel eine begrenzte Topfzeit von bis zu 24 Stunden. Die daraus hergestellten Beschichtungen sind bei Raumtemperatur bis 80°C aushärtbar.

Gegenstand der vorliegenden Erfindung sind somit auch wässrige 2-Komponenten-Beschichtungsmittel, enthaltend
A) 70 bis 98 Gew.-% erfmdungsgemäße hydroxyfunktionelle, Urethangruppen enthaltende Polyester-Dispersionen, gegebenenfalls zusammen mit anderen Dispersionen und
B2) 2 bis 30 Gew.-% gegebenenfalls hydrophil modifizierte, freie Isocyanatgruppen aufweisende Polyisocyanate .

Werden die erfindungsgemäßen Dispersionen alleine auf Substrate aufgetragen, so werden klare, sehr gut verlaufende Schichten ohne Fehlstellen bzw. Krater erhalten und es sind sehr hohe Schichtstärken bis über 100 µm möglich. Die Dispersionen zeigen keine ausgeprägte physikalische Trocknung, dass heißt die Schichten bleiben mehr oder weniger klebrig bzw. griffig. Ausgehärtete, klebfreie und harte Schichten erhält man erst durch Kombination mit mindestens einem Vernetzerharz und erfolgter Aushärtung.

Die wässrigen Bindemittelkombinationen, enthaltend die erfindungsgemäßen Polyester-Dispersionen können gegebenenfalls die üblichen Hilfs- und Zusatzmittel enthalten, wie organische und/oder anorganische Pigmente bzw. Metallic-Pigmente auf der Basis von Aluminiumflocken, Füllstoffe wie beispielsweise Ruß, Kieselsäure, Talkum, Kaolin, Glas als Pulver oder in Form von Fasern und Mischungen dieser und/oder anderer für die Herstellung von Lacken, Beschichtungen und Klebstoffen gebräuchlichen Materialien.

Zur Erzielung besonderer Effekte ist es auch möglich, geringe Mengen an in der Lack- und Klebstoffindustrie üblichen Hilfsmitteln bei der Herstellung der erfindungsgemäßen Polyester-Dispersionen zuzusetzen, wie z.B. oberflächenaktive Substanzen, Emulgatoren, Stabilisatoren, Antiabsetzmittel, UV-Stabilisatoren, Katalysatoren für die Vernetzungsreaktion, Entschäumer, Antioxidantien, Hautverhinderungsmittel, Verlaufshilfsmittel, Verdicker und/oder Bakterizide.

Die erfindungsgemäßen Dispersionen sind grundsätzlich zur Beschichtung, Lackierung, Verklebung, Behandlung und Abdichten unterschiedlichster Substrate, insbesondere Metalle, Holz, Keramik, Stein, Beton, Bitumen, Hartfaser, Glas, Porzellan, Kunststoffen, Leder und/ oder Textilien der verschiedensten Art geeignet.

Die erfindungsgemäßen Lacke können durch an sich bekannte Methoden wie Spritzen, Fluten, Gießen, Tauchen, Walzen, Streichen auf das zu beschichtende Substrat aufgebracht werden. Die erfindungsgemäßen Lacke können auch als Teil eines mehrschichtigen Lackaufbaus, bestehend z.B. aus Grundierung und/oder Füller und/oder Basislack und/oder Decklack, verwendet werden. Dabei sind auch Nass-in-Nass-Lackierverfahren möglich, bei denen mindestens zwei Schichten nacheinander appliziert, ggf. vorgetrocknet und dann gemeinsam eingebrannt werden. Die erfindungsgemäßen Lacke können anteilig auch eine oder mehrere andere wässrige Dispersionen z.B. auf Polyesterbasis, auf Polyurethanbasis, auf Polyurethan-Polyacrylatbasis, auf Polyacrylatbasis, auf Polyetherbasis, auf Polyester-Polyacrylatbasis, auf Alkydharzbasis, auf Polymerisatbasis, auf Polyamid/imidbasis und auf Polyepoxidbasis enthalten

Es werden damit vorzugsweise Lacke erhalten, die sich durch eine sehr gute Verarbeitbarkeit auszeichnen und zu Beschichtungen mit ausgezeichneter Filmoptik und Verlauf, sehr geringer Krateranfälligkeit, guten Beständigkeitseigenschaften, ein ausgeglichenes Härte-/Elastizitätsniveau und eine sehr gute Lagerstabilität auszeichnen.

### Beispiele

Desmodur^{®} N 3300 = hexamethylene diisocyanate trimer (Bayer MaterialScience AG, Germany)
Desmodur^{®} T 80 = toluylidene diisocyanate (Bayer MaterialScience AG, Germany)
Proglide^{®} DMM = glycol ether solvent (DOW chemical company, USA)
Cymel^{®} 328; Cymel^{®} 327 = aminocrosslinker resins (Cytec Ind. Inc., USA)
Additol^{®} XW 395 = film levelling additive (Cytec Ind. Inc., USA)
Surfynol^{®} 104E = tenside (Air products and chemicals Inc.; USA)
Bayhydur^{®} BL 5140 = polyisocyanate dispersion with blocked isocyanate groups
(Bayer MaterialScience AG, Germany)
Tronox^{®} R-KB-4 = titanium dioxide (Tronox Inc., USA)

### Polyester-Dispersion 1)

63 g eines Polyesters 1a) (Umsetzungsprodukt aus 1273 g Phthalsäureanhydrid, 1080 g Adipinsäure, 285,6 g Rizinusöl, 523 g Trimethylolpropan und 1523 g Neopentylglykol; OH-Zahl = 129 mg KOH/g Polyester, Säurezahl = 2,0 mg KOH/g Polyester, theoretisches Molekulargwicht 1500 g/mol, theoretische Funktionalität 3,5), 21 g Dimethylolpropionsäure b) und 142 g Aceton werden bei 60°C homogenisiert. Nach Zugabe von 84 g Hexamethylendiisocyanat c) wird solange gerührt, bis der theoretische NCO-Gehalt von ca. 7,3 % erreicht ist. Diese acetonische Lösung wird dann zu 882 g des Polyester 1a) zugegeben und solange bei 60°C gerührt bis der NCO-Gehalt = 0 % ist. Anschließend werden 142 g Aceton und 14 g Dimethylethanolamin zugegeben und homogenisiert. Durch Zugabe von 1560 g destilliertem Wasser wird eine Dispersion hergestellt und anschließend das Aceton abdestilliert.

Man erhält eine hydroxyfunktionelle, Urethangruppen enthaltende Polyester-Dispersion 1) mit einem Festkörpergehalt von 40 %, einem pH-Wert von 8,1, einer Viskosität von 35 Sekunden im Ford DIN 4 Becher bei 23°C und einer mittleren Teilchengröße von 150 nm. Der Urethangruppengehalt bezogen auf Festkörper beträgt 5,6 %, die über die Komponente b) eingebaute Säurezahl beträgt 8,4 mg KOH/g Festkörper.

### Polyester-Dispersion 2)

108,9 g des Polyesters 1a) aus Bsp. 1), 36,4 g DMPS b) und 247 g Aceton werden bei 60°C homogenisert. Dann werden 21 g Ethyldiisopropylamin zur Überführung eines Teils der Carboxylgruppen der Dimethylolpropionsäure in Carboxylatgruppen zugegeben. Anschließen werden 145,3 g Hexamethylendiisocyanat c) zugegeben und solange gerührt bis der NCO-Wert < 5,8% liegt. Diese acetonische Lösung wird dann zu 1525 g Polyester 1a) zugegeben und solange bei 60°C gerührt, bis der NCO-Wert = 0 % ist. Anschließend werden 247 g Aceton und 9,7 g Dimethylethanolamin zugegeben und homogenisiert. Durch Zugabe von 2694 g destilliertem Wasser wird eine Dispersion hergestellt und anschließend das Aceton abdestilliert.

Man erhält eine hydroxyfunktionelle, Urethangruppen enthaltende Polyester-Dispersion 2) mit einem Festkörpergehalt von 40 %, einem pH-Wert von 8,3, einem Neutralisationsgrad von 100 %, einer Viskosität von 24 Sekunden im Ford DIN 4 Becher bei 23°C und einer mittleren Teilchengröße von 120 nm. Das per Gelpermeationschromatographie ermittelte Molekulargewicht beträgt ca. 16000 g /mol. Der Urethangruppengehalt bezogen auf Festkörper beträgt 5,6%, die über die Komponente b) eingebaute Säurezahl beträgt 8,4 mg KOH/g Festkörper.

### Polyester-Dispersion 3)

39,1 g eines Polyesters 2a) (Umsetzungsprodukt aus 977 g Phthalsäureanhydrid, 1606 g Adipinsäure, 590 g Trimethylolpropan und 1830 g Neopentylglykol; OH-Zahl = 157 mg KOH/g Polyester, Säurezahl = 1,8 mg KOH/g Polyester, theoretisches Molekulargwicht 1100 g/mol, theoretische Funktionalität 3,1), 13,1 g Dimethylolpropionsäure b), 93 g Aceton und 7,5 g Ethyldiisopropylamin werden bei 60°C homogenisiert. Nach Zugabe von 56,5 g Hexamethylendiisocyanat c) wird solange gerührt, bis der theoretische NCO-Gehalt von ca. 7,4 % erreicht ist. Diese acetonische Lösung wird dann zu 544 g des Polyester 2 a) zugegeben und solange bei 60°C gerührt bis der NCO-Gehalt = 0% ist. Anschließend werden 93 g Aceton und 3,5 g Dimethylethanolamin zugegeben und homogenisiert. Durch Zugabe von 967 g destilliertem Wasser wird eine Dispersion hergestellt und anschließend das Aceton abdestilliert. Man erhält eine hydroxyfunktionelle, Urethangruppen enthaltende Polyester-Dispersion 3) mit einem Festkörpergehalt von 41 %, einem pH-Wert von 8,0, einer Viskosität von 15 Sekunden im Ford DIN 4 Becher bei 23°C und einer mittleren Teilchengröße von 160 nm. Der Urethangruppengehalt bezogen auf Festkörper beträgt 6,1%, die über die Komponente b) eingebaute Säurezahl beträgt 8,4 mg KOH/g Festkörper.

### Polyester-Dispersion 4)

39,1 g eines Polyesters 3 a) (Umsetzungsprodukt aus 986 g Phthalsäureanhydrid, 1621 g Adipinsäure, 595 g Trimethylolpropan, 311 g Rizinusöl und 1732 g Neopentylglykol; OH-Zahl = 129 mg KOH/g Polyester, Säurezahl = 1,2 mg KOH/g Polyester, theoretisches Molekulargewicht 1500 g/Mol, theoretische Funktionalität 3,4), 13,1 g Dimethylolpropionsäure b), 93 g Aceton und 5,9 g Triethylamin werden bei 60°C homogenisiert. Nach Zugabe von 57,3 g Hexamethylendiisocyanat c) wird solange gerührt, bis der theoretischen NCO-Gehalt von ca. 6,5 % erreicht ist. Diese acetonische Lösung wird dann zu 542 g des Polyester 3a) zugegeben und solange bei 60°C gerührt bis der NCO-Gehalt = 0 % ist. Anschließend werden 93 g Aceton und 3,5 g Dimethylethanolamin zugegeben und homogenisiert. Durch Zugabe von 967 g destilliertem Wasser wird eine Dispersion hergestellt und anschließend Aceton abdestilliert. Man erhält eine hydroxyfunktionelle, Urethangruppen enthaltende Polyester-Dispersion 4) mit einem Festkörpergehalt von 40 %, einem pH-Wert von 8,3, einer Viskosität von 50 Sekunden im Ford DIN 4 Becher bei 23°C und einer mittleren Teilchengröße von 120 nm. Der Urethangruppengehalt bezogen auf Festkörper beträgt 6,2 %, die über die Komponente b) eingebaute Säurezahl beträgt 8,4 mg KOH/g Festkörper.

### Polyester-Dispersion 5)

74,2 g eines Polyesters 4a) (Umsetzungsprodukt aus 1273 g Phthalsäureanhydrid, 1080 g Adipinsäure, 523 g Trimethylolpropan, 285 g Rizinusöl und 1619 g Neopentylglykol; OH-Zahl = 142 mg KOH/g Polyester, Säurezahl = 1,6 mg KOH/g Polyester, theoretisches Molekulargewicht 1280 g/mol, theoretische Funktionalität 3,2), 18,6 g Dimethylolpropionsäure b) und 203,7 g Aceton werden bei 60°C homogenisiert. Nach Zugabe von 62,2 g Hexamethylendiisocyanat und 15,8 g Isophorondiisocyanat c) wird solange gerührt, bis der theoretischen NCO-Gehalt von ca. 4,7 % erreicht ist. Diese acetonische Lösung wird dann zu 757 g des Polyester 4 a) zugegeben und solange bei 60°C gerührt bis der NCO-Gehalt = 0 % ist. Anschließend werden 67 g Aceton, 12,3 g Dimethylethanolamin und 35,3 g Butylglykol zugegeben und homogenisiert. Durch Zugabe von 1353,7 g destilliertem Wasser wird eine Dispersion hergestellt und anschließend Aceton abdestilliert. Man erhält eine hydroxyfunktionelle, Urethangruppen enthaltende Polyester-Dispersion 5) mit einem Festkörpergehalt von 40,4 %, einem pH-Wert von 8,1, einer Viskosität von 1100 mPAs/ 23°C und einer mittleren Teilchengröße von 100 nm. Der Urethangruppengehalt bezogen auf Festkörper beträgt 5,6 %, die über die Komponente b) eingebaute Säurezahl beträgt 8,4 mg KOH/g Festkörper.

### Polyester-Dispersion 6)

62,4 g eines Polyesters 5a) (Umsetzungsprodukt aus 1552 g Phthalsäureanhydrid, 920 g Adipinsäure, 549 g Trimethylolpropan, 300 g Rizinusöl und 1610 g Neopentylglykol; OH-Zahl = 129 mg KOH/g Polyester, Säurezahl = 1,2 mg KOH/g Polyester, theoretisches Molekulargewicht 1500 g/mol, theoretische Funktionalität 3,5), 20,9 g Dimethylolpropionsäure b) und 193,5 g Aceton werden bei 60°C homogenisiert. Nach Zugabe von 83,2 g Hexamethylendiisocyanat c) wird solange gerührt, bis der theoretischen NCO-Gehalt von ca. 6,7 % erreicht ist. Diese acetonische Lösung wird dann zu 874 g des Polyester 5 a) zugegeben und solange bei 60°C gerührt bis der NCO-Gehalt = 0 % ist. Anschließend werden 60 g Aceton, 13,9 g Dimethylethanolamin und 39,6 g Butylglykol zugegeben und homogenisiert. Durch Zugabe von 1507 g destilliertem Wasser wird eine Dispersion hergestellt und anschließend Aceton abdestilliert. Man erhält eine hydroxyfunktionelle, Urethangruppen enthaltende Polyester-Dispersion 6) mit einem Festkörpergehalt von 41 %, einem pH-Wert von 8,1, einer Viskosität von 1100 mPas/23°C und einer mittleren Teilchengröße von 164 nm. Der Urethangruppengehalt bezogen auf Festkörper beträgt 5,6 %, die über die Komponente b) eingebaute Säurezahl beträgt 8,4 mg KOH/g Festkörper.

### Polyester-Dispersion 7)

58,5 g des Polyesters 4a) aus Bsp. 5, 19,5 g eines monohydroxyfunktionellen Methoxypolethylenglykol d) mit dem Molekulargewicht 500, 19,5 g DMPS b) und 204 g Aceton werden bei 60°C homogenisiert. Anschließend werden 78 g Hexamethylendiisocyanat zugegeben und solange gerührt bis der theoretischen NCO-Wert von ca. 4,8 % erreicht ist. Diese acetonische Lösung wird dann zu 800 g Polyester 4 a) zugegeben und solange bei 60°C gerührt, bis der NCO-Wert = 0 % ist. Anschließend werden 68 g Aceton, 12,9 g Dimethylethanolamin und 36,4 g Butylglykol zugegeben und homogenisiert. Durch Zugabe von 1413 g destilliertem Wasser wird eine Dispersion hergestellt und anschließend das Aceton abdestilliert. Man erhält eine hydroxyfunktionelle, Urethangruppen enthaltende Polyester-Dispersion 7) mit einem Festkörpergehalt von 40,3 %, einem pH-Wert von 8,2, einer Viskosität von 400 mPAs /23°C und einer mittleren Teilchengröße von 95 nm. Der Urethangruppengehalt bezogen auf Festkörper beträgt 5,6 %, die über die Komponente b) eingebaute Säurezahl beträgt 8,4 mg KOH/g Festkörper.

### Polyester-Dispersion 8)

583 g eines Polyesters 6a) (Umsetzungsprodukt aus 955 g Phthalsäureanhydrid, 356 g Isophthalsäure 1318 g Adipinsäure, 576 g Trimethylolpropan und 1722 g Neopentylglykol; OH-Zahl = 136 mg KOH/g Polyester, Säurezahl = 2,3 mg KOH/g Polyester, theoretisches Molekulargewicht 1400 g/mol, theoretische Funktionalität 3,3), 13,1 g Dimethylolpropionsäure b), 186 g Aceton und 7,5 g Ethyldiisopropylamin werden bei 60°C homogenisiert. Nach Zugabe von 56,5 g Hexamethylendiisocyanat c) wird solange gerührt, bis der NCO-Gehalt = 0 % ist. Anschließend werden 3,5 g Dimethylethanolamin zugegeben und homogenisiert. Durch Zugabe von 967 g destilliertem Wasser, welches eine Temperatur von 25°C aufweist, wird eine Dispersion hergestellt, wobei parallel zur Wasserzugabe das Aceton durch Anlegen eines Vakuums in einer solchen Geschwindigkeit abdestilliert wird, dass die abdestillierte Acetonmengen in etwa der zugegebenen Menge an Dispergierwasser entspricht. Mit der Destillation wird dann begonnen, wenn etwa 15 % der Wassermenge zugegeben worden sind. Man erhält eine hydroxyfunktionelle, Urethangruppen enthaltende Polyester-Dispersion 8) mit einem Festkörpergehalt von 41 %, einem pH-Wert von 8,2, einer Viskosität von 17 Sekunden im Ford DIN 4 Becher bei 23°C und einer mittleren Teilchengröße von 170 nm. Der Urethangruppengehalt bezogen auf Festkörper beträgt 6,1%, die über die Komponente b) eingebaute Säurezahl beträgt 8,4 mg KOH/g Festkörper.

### Polyester-Dispersion 9)

58,8 g eines Polyesters 4a) (Umsetzungsprodukt aus 1273 g Phthalsäureanhydrid, 1080 g Adipinsäure, 523 g Trimethylolpropan, 285 g Rizinusöl und 1619 g Neopentylglykol; OH-Zahl = 142 mg KOH/g Polyester, Säurezahl = 1,6 mg KOH/g Polyester, theoretisches Molekulargewicht 1280 g/mol, theoretische Funktionalität 3,2), 19,6 g Dimethylolpropionsäure b), 9,4 Ethyldiisopropyamin und 135,8 g Aceton werden bei 60°C homogenisiert. Nach Zugabe von 78,4 g Hexamethylendiisocyanat c) wird solange gerührt, bis der theoretischen NCO-Gehalt von ca. 5,8 % erreicht ist. Zu diese acetonische Lösung werden dann 823 g des Polyester 4 a) zugegeben und solange bei 60°C gerührt bis der NCO-Gehalt = 0% ist. Anschließend werden 67 g Aceton, 6,5 g Dimethylethanolamin und 37,3 g Butylglykol zugegeben und homogenisiert. Durch Zugabe von 1416 g destilliertem Wasser, welches eine Temperatur von 20°C aufweist, wird eine Dispersion hergestellt, wobei parallel zur Wasserzugabe das Aceton durch Anlegen eines Vakuums in einer solchen Geschwindigkeit abdestilliert wird, dass die abdestillierte Acetonmengen in etwa der zugegebenen Menge an Dispergierwasser entspricht. Man erhält eine hydroxyfunktionelle, Urethangruppen enthaltende Polyester-Dispersion 9) mit einem Festkörpergehalt von 44,1 %, einem pH-Wert von 8,3, einer Viskosität von 650 mPas bei 23°C und einer mittleren Teilchengröße von 129 nm. Der Urethangruppengehalt bezogen auf Festkörper beträgt 5,6 %, die über die Komponente b) eingebaute Säurezahl beträgt 8,4 mg KOH/g Festkörper.

### Polyester-Dispersion 10)

103,6 g eines Polyesters (Umsetzungsprodukt aus 557 g Phthalsäureanhydrid und 500 g Hexandiol; OH-Zahl = 56 mg KOH/g Polyester, Säurezahl = 1,0 mg KOH/g Polyester, theoretisches Molekulargewicht 2000 g/Mol, theoretische Funktionalität 2,0), 21,1 g Dimethylolpropionsäure b), und 203,7 g Aceton werden bei 60°C homogenisiert. Nach Zugabe eines Isocyanatgemisches c) aus 68,7 g Hexamethylendiisocyanat und 17,9 g Isophorondiisocyanat wird solange gerührt, bis der theoretischen NCO-Gehalt von ca. 5,7 % erreicht ist. Zu dieser acetonische Lösung werden dann 845,5 g des Polyester 1 a) zugegeben und solange bei 60°C gerührt bis der NCO-Gehalt = 0 % ist. Anschließend werden 67 g Aceton, 14,0 g Dimethylethanolamin und 39,6 g Butylglykol zugegeben und homogenisiert. Durch Zugabe von 1533 g destilliertem Wasser wird eine Dispersion hergestellt und anschließend Aceton abdestilliert. Man erhält eine hydroxyfunktionelle, Urethangruppen enthaltende Polyester-Dispersion 10) mit einem Festkörpergehalt von 41,6 %, einem pH-Wert von 8,3, einer Viskosität von 700 mPas bei 23°C und einer mittleren Teilchengröße von 175 nm. Der Urethangruppengehalt bezogen auf Festkörper beträgt 5,4 %, die über die Komponente b) eingebaute Säurezahl beträgt 8,4 mg KOH/g Festkörper.

### Polyester-Dispersion 11)

57,2 g eines Polyesters (Umsetzungsprodukt aus 700 g Adipinsäure und 478 g Butandiol; OH-Zahl =50 mg KOH/g Polyester, Säurezahl = 1,2 mg KOH/g Polyester, theoretisches Molekulargewicht 2250 g/mol, theoretische Funktionalität 2,0), 19,1 g Dimethylolpropionsäure b), und 257,3 g Aceton werden bei 60°C homogenisiert. Nach Zugabe eines Isocyanatgemisches c) aus 62 g Hexamethylendiisocyanat und 14,3 g Desmodur^{®} N3300, Bayer AG, Hexamethylendiisocyanat-Trimerisat, wird solange gerührt, bis der theoretischen NCO-Gehalt von ca. 4,9 % erreicht ist. Zu dieser acetonischen Lösung werden dann 801 g des Polyester 1 a) zugegeben und solange bei 60°C gerührt bis der NCO-Gehalt = 0% ist. Anschließend werden 12,7 g Dimethylethanolamin und 36,3 g Butylglykol zugegeben und homogenisiert. Durch Zugabe von 1381 g destilliertem Wasser wird eine Dispersion hergestellt und anschließend Aceton abdestilliert. Man erhält eine hydroxyfunktionelle, Urethangruppen enthaltende Polyester-Dispersion 11) mit einem Festkörpergehalt von 36 %, einem pH-Wert von 8,8, einer Viskosität von 60 Sekunden im Ford DIN 4 Becher bei 23°C und einer mittleren Teilchengröße von 240 nm. Der Urethangruppengehalt bezogen auf Festkörper beträgt 5,0 %, die über die Komponente b) eingebaute Säurezahl beträgt 8,4 mg KOH/g Festkörper.

### Polyester-Dispersion 12)

55,4 g eines Polyethers (difunktioneller Polypropylenoxidpolyether, Molekulargewicht 2000 g/mol, theoretische Funktionalität 2,0), 19,7 g Dimethylolpropionsäure b), und 257,3 g Aceton werden bei 60°C homogenisiert. Nach Zugabe eines Isocyanatgemisches c) aus 59,2 g Hexamethylendiisocyanat und 16,9 g Toluylidendiisocyanat Desmodur^{®} T80, Bayer AG, wird solange gerührt, bis der theoretischen NCO-Gehalt von ca. 5,6 % erreicht ist. Zu dieser acetonischen Lösung werden dann 788 g des Polyester 1a) zugegeben und solange bei 60°C gerührt bis der NCO-Gehalt = 0 % ist. Anschließend werden 13,1 g Dimethylethanolamin und 35,8 g Butylglykol zugegeben und homogenisiert. Durch Zugabe von 1360 g destilliertem Wasser wird eine Dispersion hergestellt und anschließend Aceton abdestilliert. Man erhält eine hydroxyfunktionelle, Urethangruppen enthaltende Polyester-Dispersion 12) mit einem Festkörpergehalt von 39,8 %, einem pH-Wert von 8,3, einer Viskosität von 27 Sekunden im Ford DIN 4 Becher bei 23°C und einer mittleren Teilchengröße von 190 nm. Der Urethangruppengehalt bezogen auf Festkörper beträgt 5,0 %, die über die Komponente b) eingebaute Säurezahl beträgt 8,8 mg KOH/g Festkörper.

### Polyester-Dispersion 13)

33,3 g Polyesters 2a), 9,0 g Dimethylolpropionsäure b), und 46,2 g Proglyde^{®} DMM werden bei 60°C homogenisiert. Nach Zugabe eines Isocyanatgemisches c) aus 25,0 g Hexamethylendiisocyanat und 11,4 g Isophorondiisocyanat wird solange bei 70-85°C gerührt, bis der theoretischen NCO-Gehalt von ca. 5,5 % erreicht ist. Zu dieser Lösung werden dann 338,3 g des Polyester 2 a) zugegeben und solange gerührt bis der NCO-Gehalt = 0 % ist. Anschließend werden 6,1 g Dimethylethanolamin und 21,9 g Butylglykol zugegeben und homogenisiert. Durch Zugabe von 550 g destilliertem Wasser wird eine Dispersion hergestellt und anschließend Aceton abdestilliert. Man erhält eine hydroxyfunktionelle, Urethangruppen enthaltende Polyester-Dispersion 13) mit einem Festkörpergehalt von 40,4 %, einem pH-Wert von 7,8, einer Viskosität von 200 mPAs bei 23°C und einer mittleren Teilchengröße von 200 nm. Der Urethangruppengehalt bezogen auf Festkörper beträgt 5,7%, die über die Komponente b) eingebaute Säurezahl beträgt 8,9 mg KOH/g Festkörper.

### Polyester-Dispersion 14)

223,9 g eines Polyesters (Umsetzungsprodukt aus 557 g Phthalsäureanhydrid und 500 g Hexandiol; OH-Zahl = 56 mg KOH/g Polyester, Säurezahl = 1,0 mg KOH/g Polyester, theoretisches Molekulargewicht 2000 g/Mol, theoretische Funktionalität 2,0), 22,4 g Dimethylolpropionsäure b), und 203,7 g Aceton werden bei 60°C homogenisiert. Nach Zugabe von 89,6 g Hexamethylendiisocyanat c) wird solange gerührt, bis der theoretischen NCO-Gehalt von ca. 4,0 % erreicht ist. Zu dieser acetonische Lösung werden dann 784 g des Polyester 1a) zugegeben und solange bei 60°C gerührt bis der NCO-Gehalt = 0% ist. Anschließend werden 67 g Aceton, 14,9 g Dimethylethanolamin und 42,6 g Butylglykol zugegeben und homogenisiert. Durch Zugabe von 1622 g destilliertem Wasser wird eine Dispersion hergestellt und anschließend Aceton abdestilliert. Man erhält eine hydroxyfunktionelle, Urethangruppen enthaltende Polyester-Dispersion 14) mit einem Festkörpergehalt von 38 %, einem pH-Wert von 8,4, einer Viskosität von 900 mPas bei 23°C und einer mittleren Teilchengröße von 80 nm. Der Urethangruppengehalt bezogen auf Festkörper beträgt 5,4 %, die über die Komponente b) eingebaute Säurezahl beträgt 8,4 mg KOH/g Festkörper.

### Lackprüfung:

**Klarlack A):** 179 g der erfindungsgemäßen Polyester-Dispersion 3), 29,4 g Aminovernetzerharz Cymel^{®} 328 von Cytec, 1,8 g Additol^{®} XW 395 von UCB, 1,8 g Surfynol^{®} 104 E von Air Products und 0,2 g Dimethylethanolamin werden zu einem Klarlack formuliert. Der Klarlack hat einen Festkörpergehalt von 46,2%, einen pH-Wert von 8,3 und eine Auslaufzeit im DIN 4 Becher/23°C von 16 s.

Nach Lagerung bei 40°C für 10 Tage bleibt die Viskosität nahezu unverändert (15 s).

**Klarlack B)**: 182,9 g eines wässrigen Polyesters gemäß Beispiel 2) aus EP 498 156, mit einem Urethangruppengehalt von 7,7 %, einem Neutralisationsgrad von 100 %, einem pH-Wert von 8,3, einer Säurezahl von 18 mg KOH/G Feststoff und einem Festkörpergehalt von ca. 40 %, 29,4 g Aminovernetzerharz Cymel^{®} 328, 1,8 g Additol^{®} XW 395, 1,8 g Surfynol^{®} 104 E, 0,2 g Dimethylethanolamin und 17 g destilliertes Wasser werden zu einem Klarlack formuliert. Der Klarlack hat einen Festkörpergehalt von 42,9 %, einen pH-Wert von 8,3 und eine Auslaufzeit von 40 s.

Nach Lagerung bei 40°C für 10 Tage steigt die Viskosität von 40 auf 50 s an.

Beide Dispersionen wurden eine Aufguss- bzw. Ablaufprüfung auf Glasplatten unterzogen, bei der insbesondere die Verlaufseigenschaften und die Neigung zur Kraterbildung bei der Verfilmung geprüft werden. Dabei sind die Bewertungsstufen 1 = sehr gut bis 5 = mangelhaft, mit den entsprechenden Abstufungen dazwischen. Die Klarlacke werden nach der Herstellung auf Bleche aufgetragen, 10 Minuten bei Raumtemperatur abgelüftet und dann 30 Minuten bei 130°C eingebrannt.

| Prüfergebnisse | **Klarlack A (Erfindungsgemäß)** | **Klarlack B (Vergleich)** |
|---|---|---|
| **Aufgussprüfung des Dispersion** | | |
| - Krater | Menge 1/Größe 1 | Menge 3 / Größe 2 |
| - Verlauf | Exzellent (1) | Akzeptabel (2-3) |

| **Prüfung des Lackfilms nach dem Einbrennen:** | | |
|---|---|---|
| - Pendelhärte (s) | 75 | 78 |
| - Anlösbarkeit * | 1122 | 1122 |
| - Elastizität (Erichsentiefung) mm | 9 | 8,5 |
| - Impact Test (ein / aus) | >80/>80 | >80/>80 |
| - Lackoberfläche | glatt, störungsfrei | einzelne Krater |
| * Prüfung Anlösbarkeit: Belastung jeweils 1 Minute mit 4 verschiedenen Lösemitteln: | | |
| Beurteilung: | | |
| 0 = ohne Befund, 1 = geringe Erweichung (reversibel), | | |
| 2 = mittlere Erweichung (reversibel), 3 = starke Erweichung | | |
| 4 = Beschädigung des Lackes, 5 = Lack abgelöst | | |

Beim Vergleich zeigt der Klarlack A) auf Basis der erfindungsgemäßen urethangruppenhaltige Polyester-Dispersion 3) vergleichbare filmmechanische Eigenschaften wie der Klarlack B) auf Basis der Vergleichsdispersion, obwohl sowohl der Urethangruppengehalt, als auch die Säurezahl deutlich niedriger sind, und bekanntermaßen insbesondere Urethangruppen einen besonders hohen Beitrag zum mechanischen Eigenschaftsniveau einer Beschichtung leisten. Die erfindungsgemäße Urethangruppen enthaltende Polyester-Dispersion zeigt darüber hinaus deutliche Vorteile bei der Aufgussprüfung, es sind praktisch keine Krater vorhanden, der Verlauf ist exzellent, der Vergleich zeigt dagegen eine deutliche Anzahl an Kratern und einen zwar noch akzeptablen, aber deutlich schlechteren Verlauf. Die Lackoberfläche des ausgehärteten Lackfilms ist bei dem erfindungsgemäßen Klarlack ausgezeichnet, beim Vergleich sind einzelne Krater zu erkennen.

Der aus der erfindungsgemäßen Dispersion hergestellte Klarlack zeigt außerdem überraschenderweise eine bessere Lagerstabilität als die Vergleichsdispersion

**Klarlack C)**: 184,7 g der erfindungsgemäße Polyester-Dispersion gemäß Beispiel 2), 29,4 g Aminovernetzerharz Cymel^{®} 328, 1,8 g Additol^{®} XW 395, 1,8 g Surfynol^{®} 104E, 0,1 g Dimethylethanolamin und 8,0 g destilliertes Wasser werden zu einem Klarlack formuliert. Der Klarlack hat einen Festkörpergehalt von 44,3%, einen pH-Wert von 8,3 und eine Viskosität von 40 s.

**Klarlack D)**: 135,4 g eines wässrigen Polyesters gemäß Beispiel 1) von EP 498 156, 29,4 g Aminovernetzerharz Cymel^{®} 328, 1,8 g Additol^{®} XW 395, 1,8 g Surfynol^{®} 104E, 2,0 Dimethylethanolamin und 68,0 g destilliertes Wasser werden zu einem Klarlack formuliert. Der Klarlack hat einen Festkörpergehalt von 42,0 %, einen pH-Wert von 8,3 und eine Viskosität von 40 s.

Beide Dispersionen wurden eine Aufguss- bzw. Ablaufprüfung auf Glasplatten unterzogen, bei der insbesondere die Verlaufseigenschaften und die Neigung zur Kraterbildung bei der Verfilmung geprüft werden. Die Klarlacke werden nach der Herstellung auf Bleche aufgetragen, 10 Minuten bei Raumtemperatur abgelüftet und dann 30 Minuten bei 130°C eingebrannt.

| Prüfergebnisse | **Klarlack C (Erfindungsgemäß)** | **Klarlack D (Vergleich)** |
|---|---|---|
| **Aufgussprüfung des Dispersion** | | |
| - Krater | Menge 1 /Größe 1 | Menge 3 / Größe 1 |
| - Verlauf | Exzellent (1) | Akzeptabel (2-3) |

| **Prüfung des Lackfilms nach dem Einbrennen:** | | |
|---|---|---|
| - Pendelhärte (s) | 82 | 65 |
| - Anlösbarkeit * | 1022 | 1022 |
| - Elastizität (Erichsentiefung) mm | 8,5 | 8,5 |
| - Impact Test (ein / aus) | > 80 / > 80 | > 80 / > 80 |
| - Lackoberfläche | glatt, störungsfrei | einzelne Krater |
| * Prüfung Anlösbarkeit: Belastung jeweils 1 Minute mit 4 verschiedenen Lösemitteln: | | |
| Beurteilung: | | |
| 0 = ohne Befund, 1 = geringe Erweichung (reversibel), | | |
| 2 = mittlere Erweichung (reversibel), 3 = starke Erweichung | | |
| 4 = Beschädigung des Lackes, 5 = Lack abgelöst | | |

Beim Vergleich zeigt der Klarlack C) auf Basis der erfindungsgemäßen urethangruppenhaltige Polyester-Dispersion 2) bessere filmmechanische Eigenschaften wie der Klarlack D) auf Basis der Vergleichsdispersion, obwohl sowohl der Urethangruppengehalt, als auch die Säurezahl deutlich niedriger sind, und bekanntermaßen insbesondere Urethangruppen einen besonders hohen Beitrag zum mechanischen Eigenschaftsniveau einer Beschichtung leisten. Die erfindungsgemäße urethangruppenhaltige Polyester-Dispersion zeigt darüber hinaus deutliche Vorteile bei der Aufgussprüfung, es sind praktisch keine Krater vorhanden, der Verlauf ist exzellent, der Vergleich zeigt dagegen eine deutliche Anzahl an Kratern und einen zwar noch akzeptablen, aber deutlich schlechteren Verlauf. Die Lackoberfläche des ausgehärteten Lackfilms ist bei dem erfindungsgemäßen Klarlack ausgezeichnet, beim Vergleich sind einzelne Krater zu erkennen.

**Klarlack E)**: 100 g der erfmdungsgemäße Polyester-Dispersion gemäß Beispiel 2), 56,1 g der blockierte Isocyanatgruppen enthaltenden Polyisocyanat-Dispersion Bayhydur^{®} BL 5140 von Bayer, 1,1 g Additol^{®} XW 395, 1,1 g Surfynol^{®} 104E und 10,0 g destilliertes Wasser werden zu einem Klarlack formuliert. Der Klarlack hat einen Festkörpergehalt von 37,3 %, einen pH-Wert von 8,5 und eine Viskosität von 40 s.

Nach Lagerung für 10 Tage bei 40°C ist der Klarlack noch homogen und ohne jeden Qualitätsverlust verwendbar.

**Klarlack F):** 74 g eines wässrigen Polyesters gemäß Beispiel 1) von EP-A 498 156, 56,1 g der blockierte Isocyanatgruppen enthaltenden Polyisocyanat-Dispersion Bayhydur^{®} BL 5140, 1,1 g Additol^{®} XW 395, 1,1 g Surfynol^{®} 104E, 0,9 g Dimethylethanolamin und 28,0 g destilliertes Wasser werden zu einem Klarlack formuliert. Der Klarlack hat einen Festkörpergehalt von 39,6 %, einen pH-Wert von 8,4 und eine Viskosität von 31 s.

Nach Lagerung für 10 Tage bei 40°C zeigen sich Ausfällungen im Klarlack, der dann nicht mehr ohne erheblichen Qualitätsverlust verwendbar ist.

| Prüfergebnisse | **Klarlack E (erfindungsgemäß)** | **Klarlack F (Vergleich)** |
|---|---|---|
| **Nach dem Einbrennen (30 min, 140°C):** | | |
| - Pendelhärte (s) | 69 | 56 |
| - Anlösbarkeit * | 3344 | 3344 |
| - Elastizität (Erichsentiefung) mm | >9 | >9 |
| - Impact Test (ein / aus) | > 80 /> 80 | > 80/> 80 |
| - Lackoberfläche | glatt, störungsfrei | glatt, |
| | | wenige Störungen |
| * Prüfung Anlösbarkeit: Belastung jeweils 1 Minute mit 4 verschiedenen Lösemitteln: | | |
| Beurteilung: | | |
| 0 = ohne Befund, 1 = geringe Erweichung (reversibel), | | |
| 2 = mittlere Erweichung (reversibel), 3 = starke Erweichung | | |
| 4 = Beschädigung des Lackes, 5 = Lack abgelöst | | |

Der auf Basis der erfindungsgemäßen Dispersion 2) in Kombination mit einem blockierten Polyisocyanatvemetzer formulierte Klarlack zeigt insgesamt ein besseres Eigenschaftsniveau (Pendelhärte, Lackoberfläche) als der Vergleich.

**Klarlack G)**: 187,5 g der erfindungsgemäßen Polyester-Dispersion gemäß Beispiel 4), 29,4 g Aminovernetzerharz Cymel^{®} 328, 1,8 Additol^{®} XW 395, 1,8 g Surfynol^{®} 104E und 0,1 g Dimethylethanolamin werden zu einem Klarlack formuliert. Der Klarlack hat einen Festkörpergehalt von 45,3 %, einem pH-Wert von 8,2 und eine Viskosität von 32 s.

Nach 10 Tagen Lagerung bei 40°C ist die Viskosität leicht abgefallen auf 28 s, der Lack ist aber noch homogen und voll gebrauchsfähig. Die Ablaufprüfung der Dispersion führt zu exzellenten Werten, der eingebrannte Lackfilme hat eine ausgezeichnete Filmoptik, ansprechende mechanische Eigenschaften und eine sehr gute Lösemittelbeständigkeit.

**Klarlack H):** 100,0 g der erfmdungsgemäßen Polyester-Dispersion gemäß Beispiel 8), 56,1 g der blockierte Isocyanatgruppen enthaltenden Polyisocyanat-Dispersion Bayhydur^{®} BL 5140, 1,1 g Additol^{®} XW 395, 1,1 g Surfynol^{®} 104E und 1,0 g destilliertes Wasser werden zu einem Klarlack formuliert.

Der Klarlack hat einen Festkörpergehalt von 39,6 %, einen pH-Wert von 8,6 und eine Viskosität von 40 s und führt zu Beschichtungen mit vergleichbaren Eigenschaften wie Klarlack E).

Nach Lagerung für 10 Tage bei 40°C ist der Klarlack noch homogen und verwendbar.

### Pigmentierter Decklack I)

Aus 14,63 g Polyester-Dispersion 2), 1,2 g einer 10%-gen, wässrigen Dimethylethanolaminlösung, 4,5 g Wasser und 30 g Titandioxid Tronox^{®} R-KB-4 wird eine Lackanreibung hergestellt und mit 36,6 g Polyester-Dispersion 2), 10 g Aminovernetzerharz Cymel^{®} 327, 0,4 g Byk^{®} 301 und 2,68 g abgemischt. Man erhält einen weiß pigmentierten Decklack mit einer Viskosität im DIN 4 mm Becher bei 23°C von 31 s, einem PH-Wert von 8,8 und einem Festkörpergehalt von 58 %.

### Pigmentierte Decklack J und K)

Die Herstellung des pigmentiertem Decklack I) wird wiederholt, wobei anstelle der erfindungsgemäßen Polyester-Dispersion 2) für Decklack J) eine Dispersion gemäß Beispiel 1) aus EP-A 498 156 eingesetzt wurde und für Decklack K) eine Dispersion gemäß Beispiel 2) aus EP-A 498 156 eingesetzt wurde. Decklack J) hat eine Viskosität von 33 s, einen Festkörpergehalt von 60 % und einen pH-Wert von 8,4. Decklack K) hat eine Viskosität von 32 s, einen pH-Wert von 8,5 und einen Festkörpergehalt von 59 %.

| **Prüfergebnisse** | **Pigmentierter Lack I) (erfindungsgemäß)** | **Pigmentierter Lack J) (Vergleich)** | **Pigmentierter Lack K) (Vergleich)** |
|---|---|---|---|
| **Einbrennen auf Bonder Blech bzw. Glas** (10 min, 160°C): | | | |
| - Schichtdicke [ym] | 32-35 | 30-31 | 30-31 |
| - Pendelhärte (s) | 93 | 64 | 66 |
| - Haftung (1 = sehr gut; 5 = schlecht) | 1 | 1 | 1-2 |
| - Anlösbarkeit (MEK-Wischtest (100 Doppelhübe) | o.B. | o.B. | o.B. |
| - Elastizität (Erichsentiefung) mm | 7,3 | 6,3 | 7,3 |
| - Glanz (60°) | 89 | 87 | 88 |
| - Lackoberfläche | glatt, störungsfrei | glatt, wenige Störungen | glatt, wenige Störungen |
| - Weißgrad sofort | 89 | 89 | 90 |
| - Weißgrad nach 96 h 180°C | 22 | 7 | 7 |

Der erfindungsgemäße Lack zeigt insgesamt das beste Eigenschaftsniveau der eingebrannten Beschichtung, obwohl er auf kostengünstigeren Rohstoffen basiert. Er weist eine bessere Filmmechanik/Härte auf, eine bessere Lackoberfläche und die beste Weißgradhaltung nach längerer Hochtemperaturbelastung.

## Patentansprüche

1. Hydroxyfunktionelle, Urethangruppen enthaltende Polyester-Dispersionen enthaltend folgende Aufbaukomponenten:
a) 87,0 bis 95 Gew.-% mindestens eines hydroxyfunktionellen Polyesters mit einer mittleren Funktionalität >2,
wobei die Komponente a) zu 60 bis 100 Gew.-% aus mindestens einem Polyester und zu 40 bis 0 Gew.-% aus anderen hydroxyfunktionellen Komponenten des Molekulargewichtsbereichs von 500 bis 5000 g/mol, die C₂- und/oder C₃- und/oder C₄-Polyether- und/oder Carbonat- und/oder Polyetherester- und/oder Polymerisat- und/oder Polyesterstruktureinheiten enthalten können, besteht,
b) 1 bis 2,4 Gew.-% mindestens einer Di- und/oder Tri- und/oder Monohydroxycarbonsäure und/oder Hydroxysulphonsäure und/oder Aminosulphonsäure und/oder Aminocarbonsäure,
c) 4 bis 10,6 Gew.-% mindestens einer, mindestens difunktionellen Polyisocyanatkomponente und
d) 0 bis 3 Gew.-% sonstiger Komponenten,
wobei sich die Prozentangaben a) bis d) zu 100% ergänzen, und die zur Stabilisierung der Dispersion über die Komponente b) eingebauten Säuregruppen zu 50 bis 150 % als Salzgruppen vorliegen.

2. Hydroxyfunktionelle, Urethangruppen enthaltende Polyester-Dispersionen gemäß Anspruch 1, **dadurch gekennzeichnet, dass** die über die Komponente b) eingebaute Säurezahlen der Polyester-Dispersionen 5,0 bis 14,5 mg KOH/g Substanz beträgt.

3. Hydroxyfunktionelle, Urethangruppen enthaltende Polyester-Dispersionen gemäß Anspruch 1, **dadurch gekennzeichnet, dass** der Urethangruppengehalt der Polyester-Dispersionen (ermittelt nach dem Anteil der Strukturformel -NH-CO-O- am Gesamtaufbau des, der erfindungsgemäßen Polyester-Dispersionen zugrunde liegenden, 100%igen Polymers) im Bereich von 3,0 Gew.-% bis 6,4 Gew.-% liegt.

4. Hydroxyfunktionelle, Urethangruppen enthaltende Polyester-Dispersionen gemäß Anspruch 1, **dadurch gekennzeichnet, dass** das mittlere Molekulargewicht M_{w} der Polyester-Dispersionen bei 8.000 bis 26.000 g/mol liegt.

5. Hydroxyfunktionelle, Urethangruppen enthaltende Polyester-Dispersionen gemäß Anspruch 1, **dadurch gekennzeichnet, dass** die Polyester a) eine durchschnittliche Funktionalität von > 2,0 aufweisen.

6. Hydroxyfunktionelle, Urethangruppen enthaltende Polyester-Dispersionen gemäß Anspruch 1, **dadurch gekennzeichnet, dass** Polyester a) Umsetzungsprodukte von
a1) 30 bis 77 Gew.-% mindestens einer, mindestens difunktionellen Carbonsäure bzw. deren Anhydrids,
a2) 20 bis 50 Gew.-% mindestens eines Diols,
a3) 3 bis 30 Gew.-% mindestens eines Alkohols mit mehr als 2 Hydroxylgruppen,
a4) 0 bis 20 Gew.-% sonstige hydroxy- und/oder carboxyfunktioneller Komponenten und/oder Caprolacton
sind.

7. Verfahren zur Herstellung der hydroxyfunktionellen, Urethangruppen enthaltende Polyester-Dispersionen gemäß Anspruch 1, **dadurch gekennzeichnet, dass** in einem einzigen Reaktionsschritt die Komponenten a) bis d) bei einer Temperatur von 40 bis 140°C und in Anwesenheit von 5 bis 50 Gew.-% organischer Lösungsmittel sowie von nicht NCO-reaktiven Neutralisationsmitteln umgesetzt werden, bis der NCO-Wert = 0 % erreicht hat, anschließend gegebenenfalls Neutralisationsmittel und gegebenenfalls weitere organische Lösemittel und/oder Hilfsmittel zugesetzt werden und Wasser zur Polymerlösung oder die Polymerlösung zu Wasser gegeben wird.

8. Verfahren zur Herstellung der hydroxyfunktionellen, Urethangruppen enthaltenden Polyester-Dispersionen gemäß Anspruch 1, **dadurch gekennzeichnet, dass** in einem ersten Schritt ein NCO-funktionelles Zwischenprodukt bei 40 bis 140°C, in Anwesenheit von 5 bis 50 Gew.-% organischen Lösemitteln und von nicht NCO-reaktiven Neutralisationsmitteln, durch Umsetzung der Komponenten b), c) und d) mit einer solchen Menge der Komponente a) hergestellt wird, dass ein NCO:OH(NH)-Verhältnis von größer 1,4:1 resultiert und in einem zweiten Schritt die restliche Menge der Komponente a) und gegebenenfalls weitere Lösemittel und/oder Neutralisationsmittel zugegeben und solange umgesetzt werden bis der NCO-Gehalt = 0 % erreicht hat und anschließend gegebenenfalls Neutralisationsmittel und gegebenenfalls weitere organische Lösemittel und/oder Hilfsmittel zugesetzt werden und Wasser zur Polymerlösung oder die Polymerlösung zu Wasser gegeben wird.

9. Verfahren gemäß Anspruch 9, **dadurch gekennzeichnet, dass** in der ersten Reaktionsstufe zur Herstellung des NCO-funktionellen Zwischenproduktes 4 bis 30 Gew.-% an Komponente a), bezogen auf die Gesamtmengen der in der ersten und zweiten Reaktionsstufe insgesamt eingesetzten Mengen a) bis d), eingesetzt wird.

10. Verwendung der hydroxyfunktionelle, Urethangruppen enthaltende Polyester-Dispersionen gemäß Anspruch 1 zur Herstellung von Lacken, Beschichtungen, Klebstoffen oder Dichtstoffen.

11. Wässrige Bindemittellcombinationen, enthaltend
A) hydroxyfunktionelle, Urethangruppen enthaltende Polyester-Dispersionen gemäß Anspruch 1 und
B) mindestens ein Vernetzerharz.

12. Wässrige 1-Komponenten-Beschichtungsmittel enthaltend
A) 60 bis 98 Gew.-% Polyester-Dispersionen gemäß Anspruch 1, gegebenenfalls zusammen mit anderen Dispersionen und
B1) 2 bis 40 Gew.-% mindestens eines blockierten Polyisocyanats, welches gegebenenfalls hydrophil modifiziert sein kann und/oder mindestens eines Aminovernetzerharzes.

13. Verwendung der hydroxyfunktionellen, Urethangruppen enthaltenden Polyester-Dispersionen gemäß Anspruch 1 in wässrigen 1-Komponenten-Beschichtungsmitteln gemäß Anspruch 12 zur Herstellung von Einbrennfüllerlackierungen, Einschichtlacken, Steinschlagschutzgrundierungen oder pigmentierten Decklacken.

14. Wässrige 2-Komponenten-Beschichtungsmittel , enthaltend
A) 70 bis 98 Gew.-% hydroxyfunktionelle, Urethangruppen enthaltende Polyester-Dispersionen gemäß Anspruch 1, gegebenenfalls zusammen mit anderen Dispersionen und
B2) 2 bis 30 Gew.% gegebenenfalls hydrophil modifizierte, freie Isocyanatgruppen aufweisende Polyisocyanate.

## Claims

1. Hydroxyfunctional polyester dispersions containing urethane groups, containing the following structural components:
a) 87.0 to 95 wt.% at least of a hydroxyfunctional polyester with a mean functionality of > 2,
wherein 60 to 100 wt.% of component a) consists of at least one polyester and 40 to 0 wt.% of other hydroxyfunctional components in the molecular weight range of 500 to 5000 g/mol which can contain C₂ and/or C₃ and/or C₄ polyether structural units and/or carbonate structural units and/or polyether ester structural units and/or polymer structural units and/or polyester structural units,
b) 1 to 2.4 wt.% at least of a di- and/or tri- and/or monohydroxycarboxylic acid and/or hydroxysulfonic acid and/or aminosulfonic acid and/or aminocarboxylic acid,
c) 4 to 10.6 wt.% at least of an at least difunctional polyisocyanate component and
d) 0 to 3 wt.% other components,
wherein percentages a) to d) add up to 100%, and 50 to 150% of the acid groups incorporated to stabilise the dispersion via component b) are present as salt groups.

2. Hydroxyfunctional polyester dispersions containing urethane groups according to claim 1, **characterised in that** the acid values, incorporated via component b), of the polyester dispersions is 5.0 to 14.5 mg KOH/g substance.

3. Hydroxyfunctional polyester dispersions containing urethane groups according to claim 1, **characterised in that** the urethane group content of the polyester dispersions (determined according to the content of the structural formula -NH-CO-O in the total structure of the 100% polymer on which the polyester dispersions according to the invention are based) is in the range of 3.0 wt.% to 6.4 wt.%.

4. Hydroxyfunctional polyester dispersions containing urethane groups according to claim 1, **characterised in that** the mean molecular weight M_{w} of the polyester dispersions is 8,000 to 26,000 g/mol.

5. Hydroxyfunctional polyester dispersions containing urethane groups according to claim 1, **characterised in that** polyesters a) have an average functionality of > 2.0.

6. Hydroxyfunctional polyester dispersions containing urethane groups according to claim 1, **characterised in that** polyesters a) are reaction products with
a1) 30 to 77 wt.% at least of an at least difunctional carboxylic acid or the anhydride thereof,
a2) 20 to 50 wt.% at least of a diol,
a3) 3 to 30 wt.% at least of an alcohol with more than 2 hydroxyl groups,
a4) 0 to 20 wt.% other hydroxy- and/or carboxyfunctional components and/or caprolactone.

7. Process for the production of the hydroxyfunctional polyester dispersions containing urethane groups according to claim 1, **characterised in that** in a single reaction step components a) to d) are reacted at a temperature of 40 to 140°C and in the presence of 5 to 50 wt.% organic solvents and of non-NCO-reactive neutralisation agents, until the NCO value has reached = 0%, then optionally neutralisation agents and optionally other organic solvents and/or auxiliary substances are added and water is added to the polymer solution or the polymer solution to water.

8. Process for the production of the hydroxyfunctional polyester dispersions containing urethane groups according to claim 1, **characterised in that** in a first step an NCO-functional intermediate is produced at 40 to 140°C, in the presence of 5 to 50 wt.% organic solvents and of non-NCO-reactive neutralisation agents, by reaction of components b), c) and d) with a quantity of component a) such that an NCO:OH(NH) ratio of more than 1.4:1 results and in a second step the remaining quantity of component a) and optionally other solvents and/or neutralisation agents are added and reacted until the NCO content has reached = 0% and then optionally neutralisation agents and optionally other organic solvents and/or auxiliary substances are added and water is added to the polymer solution or the polymer solution to water.

9. Process according to claim 9, **characterised in that** in the first reaction stage for the production of the NCO-functional intermediate 4 to 30 wt.% of component a), based on the total quantities of the quantities a) to d) used in total in the first and second reaction stage, is used.

10. Use of the hydroxyfunctional polyester dispersions containing urethane groups according to claim 1 for the production of paints, coatings, adhesives or sealants.

11. Aqueous binder combinations containing
A) hydroxyfunctional polyester dispersions containing urethane groups according to claim 1 and
B) at least one cross-linking resin.

12. Aqueous 1-component coating containing
A) 60 to 98 wt.% polyester dispersions according to claim 1, optionally together with other dispersions and
B1) 2 to 40 wt.% at least of a blocked polyisocyanate which can optionally be hydrophilically modified and/or at least one amino crosslinking resin.

13. Use of the hydroxyfunctional polyester dispersions containing urethane groups according to claim 1 in aqueous 1-component coatings according to claim 12 for the production of stoving filler finishes, one-coat paints, primers protecting against flying stones or pigmented coating lacquers.

14. Aqueous 2-component coating containing
A) 70 to 98 wt.% hydroxyfunctional polyester dispersions containing urethane groups according to claim 1, optionally together with other dispersions and
B2) 2 to 30 wt.% optionally hydrophilically modified polyisocyanates having free isocyanate groups.

## Revendications

1. Dispersions de polyester hydroxyfonctionnelles contenant des groupes uréthane contenant les constituants de structure suivants :
a) de 87,0 à 95 % en poids d'au moins un polyester hydroxyfonctionnel avec une fonctionnalité moyenne > 2, le constituant a) étant constitué de 60 à 100 % en poids d'au moins un polyester et de 40 à 0 % en poids d'autres constituants hydroxyfonctionnels du domaine de poids moléculaire de 500 à 5 000 g/mol, lesquels peuvent contenir des unités de structure polyéther et/ou carbonate et/ou polyétherester et/ou polymère et/ou polyester en C₂ et/ou C₃ et/ou C₄,
b) de 1 à 2,4 % en poids d'au moins un acide di- et/ou tri- et/ou monohydroxycarboxylique et/ou d'acide hydroxy-sulfonique et/ou d'acide aminosulfonique et/ou d'acide aminocarboxylique,
c) de 4 à 10,6 % en poids d'au moins un constituant polyisocyanate au moins difonctionnel et
d) de 0 à 3 % en poids d'autres constituants,
les indications en pour-cent a) à d) se complétant jusqu'à 100 %, et les groupes acides insérés par l'intermédiaire du constituant b) pour la stabilisation de la dispersion étant présents pour de 50 à 150 % en tant que groupes de sels.

2. Dispersions de polyester hydroxyfonctionnelles contenant des groupes uréthane selon la revendication 1, **caractérisées en ce que** les indices acides insérés par l'intermédiaire du constituant b) des dispersions de polyester sont de 5,0 à 14,5 mg de KOH/g de substance.

3. Dispersions de polyester hydroxyfonctionnelles contenant des groupes uréthane selon la revendication 1, **caractérisées en ce que** la teneur en groupes uréthane des dispersions de polyester (obtenue d'après la part de la formule de structure -NH-CO-O- sur la construction globale du polymère à 100 % à la base des dispersions de polyester selon l'invention) se trouve dans le domaine de 3,0 % en poids à 6,4 % en poids.

4. Dispersions de polyester hydroxyfonctionnelles contenant des groupes uréthane selon la revendication 1, **caractérisées en ce que** le poids moléculaire moyen M_{w} des dispersions de polyester est de 8 000 à 26 000 g/mol.

5. Dispersions de polyester hydroxyfonctionnelles contenant des groupes uréthane selon la revendication 1, **caractérisées en ce que** les polyesters a) présentent une fonctionnalité moyenne > 2,0.

6. Dispersions de polyester hydroxyfonctionnelles contenant des groupes uréthane selon la revendication 1, **caractérisées en ce que** les polyesters a) sont des produits de réaction de
a1) de 30 à 77 % en poids d'au moins un acide carboxylique au moins difonctionnel respectivement d'un anhydride de celui-ci,
a2) de 20 à 50 % en poids d'au moins un diol,
a3) de 3 à 30 % en poids d'au moins un alcool avec plus de deux groupes hydroxyle,
a4) de 0 à 20 % en poids d'autres constituants hydroxy- et/ou carboxy-fonctionnels et/ou de caprolactone.

7. Procédé pour la préparation des dispersions de polyester hydroxyfonctionnelles contenant des groupes uréthane selon la revendication 1, **caractérisé en ce que** l'on fait réagir dans une seule étape de réaction les constituants a) à d) à une température de 40 à 140°C et en présence de 5 à 50 % en poids de solvants organiques ainsi que d'agents de neutralisation non NCO-réactifs jusqu'à ce que l'on atteigne la valeur NCO = 0 %, on ajoute ensuite éventuellement un agent de neutralisation et éventuellement d'autres solvants et/ou auxiliaires organiques et on introduit de l'eau dans la solution polymère ou la solution polymère dans de l'eau.

8. Procédé pour la préparation des dispersions de polyester hydroxyfonctionnelles contenant des groupes uréthane selon la revendication 1, **caractérisé en ce que** l'on prépare dans une première étape un produit intermédiaire NCO-fonctionnel à de 40 à 140°C, en présence de 5 à 50 % en poids de solvants organiques et d'agents de neutralisation non NCO-réactifs, par réaction des constituants b), c) et d) avec une quantité du constituant a) telle qu'il en résulte un rapport NCO:OH(NH) supérieur à 1,4:1 et on ajoute dans une seconde étape la quantité restante du constituant a) et éventuellement d'autres solvants et/ou agents de neutralisation et on fait réagir jusqu'à ce que l'on atteigne la teneur NCO = 0 % et on ajoute ensuite éventuellement un agent de neutralisation et éventuellement d'autres solvants et/ou auxiliaires organiques et on introduit de l'eau dans la solution polymère ou la solution polymère dans de l'eau.

9. Procédé selon la revendication 9, **caractérisé en ce que** l'on utilise dans la première étape de réaction pour la préparation du produit intermédiaire NCO-fonctionnel de 4 à 30 % en poids de constituant a), rapporté aux quantités totales des quantités a) à d) utilisées au total dans les première et seconde étapes de réaction.

10. Utilisation des dispersions de polyester hydroxyfonctionnelles contenant des groupes uréthane selon la revendication 1 pour la préparation de laques, de revêtements, de colles ou de matériaux d'étanchéité.

11. Combinaisons aqueuses de liants contenant
A) des dispersions de polyester hydroxyfonctionnelles contenant des groupes uréthane selon la revendication 1 et
B) au moins une résine de réticulant.

12. Agents de revêtement monoconstituants aqueux contenant
A) de 60 à 98 % en poids de dispersions de polyester selon la revendication 1, éventuellement avec d'autres dispersions et
B1) de 2 à 40 % en poids d'au moins un polyisocyanate bloqué, lequel peut être éventuellement modifié de manière hydrophile et/ou d'au moins une résine de réticulant amino.

13. Utilisation des dispersions de polyester hydroxyfonctionnelles contenant des groupes uréthane selon la revendication 1 dans des agents de revêtement monoconstituants aqueux selon la revendication 12 pour la préparation de laques de charge à cuire, de laques monocouches, de bases pour la protection aux chutes de pierre ou de laques de couverture pigmentées.

14. Agents de revêtement biconstituants aqueux contenant
A) de 70 à 98 % en poids de dispersions de polyester hydroxyfonctionnelles contenant des groupes uréthane selon la revendication 1 éventuellement avec d'autres dispersions et
B2) de 2 à 30 % en poids de polyisocyanates présentant des groupes isocyanate libres, éventuellement modifiés de manière hydrophile.
